# EUROPÄISCHE PATENTSCHRIFT

(11) **EP 3 325 139 B1**
(45) Veröffentlichungstag und Bekanntmachung des Hinweises auf die Patenterteilung: **08.09.2021**
(21) Anmeldenummer: 16741932.4
(22) Anmeldetag: 21.07.2016
(51) Int. Cl.: B01F 15/02, B01F 13/10, B01F 11/00, F16K 11/085

(54) **MISCHVORRICHTUNG UND VERFAHREN ZUM MISCHEN VON MEDIEN**
MIXING DEVICE AND METHOD FOR MIXING MEDIA
DISPOSITIF DE MÉLANGE ET PROCÉDÉ DE MÉLANGE DE MILIEUX

(30) Priorität: 22.07.2015 DE 102015213871
(43) Veröffentlichungstag der Anmeldung: 30.05.2018
(73) Patentinhaber: Fraunhofer Gesellschaft zur Förderung der angewandten Forschung E.V., 80686 München (DE)
(72) Erfinder: OTHMAN, Nabih, 70771 Musberg (DE); DAUMÜLLER, Marcel, 70771 Leinfelden (DE)
(74) Vertreter: Pfenning, Meinig & Partner mbB
(86) Internationale Anmeldenummer: PCT/EP2016/067421
(87) Internationale Veröffentlichungsnummer: WO 2017/013212

(56) Entgegenhaltungen:
- EP-A1- 0 126 007
- EP-A1- 1 040 773
- US-A1- 2006 000 852

## Beschreibung

Die Erfindung betrifft eine Mischvorrichtung und ein Verfahren zum Mischen von Medien, mit denen verschiedene Medien bei Vermeidung von Querkontamination miteinander vermischt werden können.

Aus dem Stand der Technik sind verschiedene Systeme zum Mischen von nieder-, mittel- und hochviskosen Medien bekannt. Diese Systeme sind allerdings für große Mengen ausgelegt und für die Herstellung kleiner individueller Mengen nicht wirtschaftlich, da Reinigungsaufwand, Wartung und Kosten zu hoch sind. Die EP 0 126 007 A1 offenbart eine Messvorrichtung zur Mischung von Flüssigkeiten, enthaltend eine Mischkammer mit einer Wand, ein Magazin mit einer Vielzahl von Kanälen und einen Mischer. Die EP 1 040 773 A1 offenbart eine tragbare Verteilereinrichtung zum Verteilen eines farbigen kosmetischen Produktes, enthaltend mindestens zwei Vorratsbehälter, eine Mischkammer, mindestens eine bewegliche Rühreinrichtung in der Misch-kammer und ein Kolben, der es erlaubt, das in der Mischkammer enthaltene Produkt zu verteilen.

Aufgabe der vorliegenden Erfindung ist es daher, eine Mischvorrichtung und ein Verfahren zum Mischen von Medien anzugeben, mit denen auch kleine und individuelle Mengen von Medien wirtschaftlich mischbar sind.

Die Aufgabe wird gelöst durch die Mischvorrichtung nach Anspruch 1 und das Verfahren zum Mischen von Medien nach Anspruch 10. Die jeweiligen abhängigen Ansprüche geben vorteilhafte Weiterbildungen der erfindungsgemäßen Mischvorrichtung und des erfindungsgemäßen Verfahrens an.

Die erfindungsgemäße Mischvorrichtung weist zunächst eine Mischkammer auf, die durch eine Innenfläche einer Wand in zumindest einigen Richtungen begrenzt wird. In jenen Richtungen, in welchen die Mischkammer nicht durch die Innenfläche der Wand begrenzt wird, kann die Mischkammer durch andere Strukturen begrenzt werden, auf die im Folgenden noch eingegangen wird. Erfindungsgemäß weist die Wand eine zylinderförmige Außenfläche auf. Die Außenfläche muss nicht parallel zur Innenfläche verlaufen, sie kann dies jedoch vorteilhaft tun.

Die Wand weist zumindest einen Zuleitungskanal auf, der einerseits mit einer Öffnung in der zylinderförmigen Außenfläche der Wand und andererseits mit einer Öffnung in der Innenfläche der Wand endet. Der Zuleitungskanal erstreckt sich also durch die Wand hindurch und endet in Öffnungen in der Innenfläche und der Außenfläche. Dass der Kanal mit einer Öffnung in der Außenfläche bzw. Innenfläche der Wand endet, bedeutet hierbei, dass eine Öffnungsfläche der entsprechenden Öffnung in der Fläche der entsprechenden Wand liegt. In bestimmten Konstellationen kann der Zuleitungskanal durch einen anschließenden Kanal fortgesetzt werden. Vorteilhafterweise mündet jedoch der Kanal in der Innenfläche der Wand über diese Öffnung in die Mischkammer.

Optional kann zusätzlich zum genannten Zuleitungskanal ein weiterer Zuleitungskanal vorgesehen sein. Dieser kann vorteilhaft in einer größeren Distanz zur Stirnfläche der Mischkammer als der genannte Zuleitungskanal in die Mischkammer einmünden. Vorteilhafterweise kann dieser weitere Zuleitungskanal einen größeren Durchmesser haben als der genannte Zuleitungskanal, so dass pro Zeiteinheit größere Volumina, beispielsweise eines Grundmaterials, in die Mischkammer einleitbar sind. Vorteilhafterweise ist der weitere Zuleitungskanal gegenüber dem genannten Zuleitungskanal um einen Winkel um die Zylinderachse der Außenfläche der Wand versetzt, so dass die Zuleitungskanäle unabhängig voneinander öffenbar sind. Alternativ kann auch auf Höhe des genannten Zuleitungskanals in Richtung der Zylinderachse im Magazin kein Kanal bei jenem Winkel vorliegen, bei welchem der weitere Zuleitungskanal in die Mischkammer einmündet.

Erfindungsgemäß weist die Mischvorrichtung ein Magazin auf, das eine zylinderförmige Innenfläche hat, deren Zylinderachse koaxial zu einer Zylinderachse der zylinderförmigen Außenfläche der Wand der Mischkammer liegt. Vorteilhafterweise umgibt die zylinderförmige Innenfläche des Magazins die zylinderförmige Außenfläche der Wand in einem nicht verschwindenden Bereich in Richtung der Zylinderachse der zylinderförmigen Außenfläche.

Die zylinderförmige Innenfläche des Magazins kann an die zylinderförmige Au-βenfläche der Wand anstoßen, es können jedoch auch Elemente zwischen dem Magazin und der Wand vorgesehen sein, wie beispielsweise ein Dichtungsring. Ist beispielsweise ein Dichtungsring zwischen der zylinderförmigen Innenfläche des Magazins und der zylinderförmigen Außenfläche der Wand vorgesehen, so stößt dieser vorzugsweise an die zylinderförmige Innenfläche des Magazins und die zylinderförmige Außenfläche der Wand an. Die Wand muss nicht notwendigerweise aus einem homogenen Material bestehen, so dass ein die Mischkammer umgebender Dichtungsring auch als Teil der Wand angesehen werden kann. Der besagte Zuleitungskanal durch die Wand kann sich dann vorteilhaft auch durch jene die Wand umgebende Struktur, also beispielsweise durch den Dichtungsring, erstrecken.

Erfindungsgemäß weist das Magazin eine Vielzahl von Kanälen auf. Jeder der Kanäle erstreckt sich jeweils von einem Anschluss zu jeweils einer Öffnung in der zylinderförmigen Innenfläche des Magazins. Das Magazin weist also für jeden der Kanäle einen Anschluss und eine Öffnung in der zylinderförmigen Innenfläche des Magazins auf. Unter einem Anschluss wird hierbei eine Öffnung des entsprechenden Kanals verstanden. Vorteilhafterweise können die Kanäle radial zur Zylinderachse der zylinderförmigen Innenfläche des Magazins verlaufen, so dass die Anschlüsse jeweils in radialer Richtung in einer Außenfläche des Magazins eingebracht sind.

In einer vorteilhaften Ausgestaltung kann das Magazin ringförmig mit einem rechteckigen Querschnitt ausgebildet sein. In diesem Fall weist das Magazin also eine zylinderförmige Innenfläche und eine zu dieser parallel verlaufende zylinderförmige Außenfläche mit zur Zylinderachse der Innenfläche koaxialer Zylinderachse auf und wird in Richtung der Zylinderachsen beiderseits durch ebene parallele Flächen begrenzt.

Erfindungsgemäß sind das Magazin und die Wand, welche die Mischkammer begrenzt, so zueinander bewegbar, dass die Öffnungen der Vielzahl von Kanäle in der Innenfläche des Magazins jeweils mit der Öffnung des zumindest einen Zuleitungskanals in der Außenfläche der Wand in einen medienleitenden Anschluss bringbar sind. Magazin und Wand sind also so gegeneinander drehbar und/oder in Richtung der Zylinderachse verschiebbar, dass der zumindest eine Zuleitungskanal in der Wand jeweils mit einem der Kanäle in dem Magazin in medienleitenden Anschluss bringbar ist. Dabei wird die entsprechende Öffnung des Kanals des Magazins in der Innenfläche des Magazins zur Öffnung des Zuleitungskanals in der Außenfläche der Wand oder einer Außenfläche einer die Wand umgebenden Struktur, in welcher der Zuleitungskanal fortgesetzt wird, bewegt, so dass die Öffnungsflächen unmittelbar aufeinander liegen und ein medienleitender Anschluss zwischen dem entsprechenden Kanal des Magazins und dem Zuleitungskanal hergestellt wird. Die beiden aneinandergrenzenden Öffnungen der Kanäle grenzen dabei vorteilhaft so dicht aneinander an, dass eine Abdichtung zwischen den Flächen, in denen die Öffnungen vorliegen, gewährleistet ist, so dass das zu leitende Medium nicht zwischen die entsprechenden Flächen gelangen kann.

Erfindungsgemäß weist die Mischvorrichtung außerdem einen Mischer auf, der in der Mischkammer angeordnet ist und zum Mischen von Medien, die in der Mischkammer vorliegen, entlang der Zylinderachse der Außenfläche der Wand bewegbar ist. Die Mischung kann also durch Bewegung des Mischers in der genannten Richtung erfolgen.

In einer vorteilhaften Ausgestaltung der Erfindung kann die Öffnung des zumindest einen Zuleitungskanals in der Innenfläche der Wand an eine feste Stirnfläche der Mischkammer angrenzen, die von der Innenfläche der Wand umlaufen wird. In diesem Fall wird also die Mischkammer einerseits durch die Innenfläche der Wand begrenzt und andererseits durch die besagte feste Stirnfläche. In dieser Ausgestaltung kann vorteilhaft ein Rand der Öffnung in der Innenfläche der Wand einen Rand der besagten Stirnfläche berühren. Bildlich gesprochen kann die Öffnung also ganz am Ende der Mischkammer angeordnet sein. Hierdurch wird es möglich, sehr kleine Volumina von Medien zu mischen.

Vorteilhafterweise können das ringförmige Magazin und die Wand bei der genannten Bewegung gegeneinander drehbar sein und/oder in Richtung der Zylinderachse der Außenfläche der Wand gegeneinander verschiebbar sein. Es können also zwischen dem Magazin und der Außenfläche der Wand ein Rotationsfreiheitsgrad und vorteilhaft auch ein Translationsfreiheitsgrad in Richtung der Zylinderachse existieren. Vorteilhafterweise sind das Magazin und die Wand nicht in radialer Richtung bezüglich der Zylinderachse der Außenfläche der Wand zueinander bewegbar. Das Magazin gleitet also vorteilhaft auf der Außenfläche der Wand.

Durch die erfindungsgemäße Ausgestaltung ist es möglich, nacheinander Medien aus verschiedenen Kanälen des Magazins in den Zuleitungskanal und dadurch in die Mischkammer einzuleiten. Der entsprechende Kanal im Magazin ist dazu wie oben beschrieben mit dem Zuleitungskanal im medienleitenden Anschluss bringbar. Nachdem das entsprechende Medium in die Mischkammer eingeleitet wurde, kann durch Bewegen des Magazins und der Außenfläche der Wand zueinander ein anderer Kanal des Magazins mit dem Zuleitungskanal in Anschluss gebracht werden und das Medium aus diesem Kanal in die Mischkammer eingebracht werden.

Die vorliegende Erfindung ist besonders vorteilhaft einsetzbar, wenn das Magazin zumindest 4 Kanäle, vorzugsweise zumindest 8 Kanäle, besonders bevorzugt zumindest 12 Kanäle aufweist. Es ist dann möglich, eine entsprechend große Zahl von verschiedenen Medien miteinander zu mischen.

Es ist möglich und vorteilhaft, die Erfindung so auszugestalten, dass bei Bewegung von einem Anschluss zum nächsten Anschluss die Öffnung des Zuleitungskanals in der Außenfläche der Wand Öffnungen von Kanälen des Magazins überstreicht, aus denen kein Medium in die Mischkammer eingeleitet werden soll. Um zu verhindern, dass bei einem solchen Überstreichen der Öffnungen das entsprechende Medium in den Zuleitungskanal gelangt, können die Kanäle des Magazins jeweils zumindest ein Ventil aufweisen, mit dem der Medienzufluss durch den entsprechenden Kanal steuerbar ist.

Es ist auch möglich, das Magazin und die Wand so gegeneinander zu bewegen, dass beim Bewegen von einem Anschluss zum nächsten Anschluss, durch den im konkreten Fall ein Medium geleitet werden soll, andere Anschlüsse nicht überfahren werden. Hierzu kann beispielsweise die Öffnung des Zuleitungskanals in der Außenfläche der Wand durch Verschieben in Richtung der Zylinderachse an den Öffnungen jener Kanäle vorbeibewegt werden, aus denen kein Medium in die Mischkammer eingeleitet werden soll.

Vorteilhafterweise kann die Mischvorrichtung so ausgestaltet sein, dass in den Kanälen des Magazins jeweils ein Medium mit einer Druckbeaufschlagung vorliegt. Eine solche kann beispielsweise durch Pumpen oder eine erhöhte Anordnung entsprechender Vorratsbehälter bewirkt werden. In einer vorteilhaften Ausgestaltung können die Kanäle des Magazins jeweils ein Ventil aufweisen, mit dem der Medienfluss regulierbar ist. Sofern die Zuleitungskanäle Ventile aufweisen, liegt die Druckbeaufschlagung vorzugsweise auf jener der Öffnung in der Innenfläche des Magazins abgewandten Seite des entsprechenden Kanals bis zum Ventil vor. Zur Einleitung des entsprechenden Mediums in die Mischkammer kann dann das Ventil geöffnet werden und/oder der entsprechende Kanal mit dem Zuleitungskanal in Anschluss gebracht werden.

In einer erfindungsgemäßen Ausgestaltung sind die Öffnungen der Kanäle des Magazins in der Innenfläche des Magazins in genau zwei oder genau drei Ebenen angeordnet, die senkrecht zur Zylinderachse der zylinderförmigen Außenfläche an der Wand stehen. Die Öffnungen können also kranzförmig angeordnet sein. Die Ebenen liegen dabei parallel oder die Kränze haben parallele Ebenen und stehen senkrecht auf der Zylinderachse der Außenfläche der Wand.

Besonders vorteilhaft können im Fall, dass die Öffnungen in mehreren Ebenen angeordnet sind, die Öffnungen benachbarter Ebenen bzw. Kränze gegeneinander versetzt sein, so dass die Öffnungen in Winkelrichtung einer Ebene zwischen den Öffnungen der entsprechenden benachbarten Ebene liegen.

Die erfindungsgemäße Mischvorrichtung kann vorteilhaft einen Auslass in einer gegenüber der Wand festen und zur Zylinderachse der Außenfläche senkrechten Stirnfläche der Mischkammer aufweisen, durch den Medien aus der Mischkammer ableitbar sind. Ein solcher Auslass kann vorteilhaft ein Ventil aufweisen, mit dem der Durchfluss von Medien durch den Auslass steuerbar ist. In dieser Ausgestaltung kann die Mischvorrichtung also als Dosierfluss- und Mischvorrichtung angesehen werden. Besonders bevorzugt ist der Auslass in der Mitte der besagten Stirnfläche angeordnet.

In einer vorteilhaften Ausgestaltung der Erfindung kann der Mischer eine Scheibe aufweisen, die senkrecht zur Zylinderachse der Außenfläche steht. Diese Scheibe kann zumindest eine, vorteilhaft mehrere Mischstrukturen enthalten, durch welche Medium von einer Seite der Scheibe zur anderen Seite der Scheibe fließen kann. Wird nun der Mischer wie oben beschrieben durch die Mischkammer bewegt, so strömen die in der Mischkammer vorhandenen Medien durch die Mischstrukturen und werden dadurch vermischt.

In einer vorteilhaften Ausgestaltung der Erfindung kann die Mischvorrichtung einen Kolben aufweisen, der die Mischkammer auf einer Seite in Richtung der Zylinderachse der Außenwand begrenzt. Wird die Mischkammer auf einer Seite durch eine feste Stirnfläche wie oben beschrieben begrenzt, so kann der Kolben die Mischkammer auf einer dieser Seite gegenüberliegenden Seite der Mischkammer begrenzen. Vorteilhafterweise ist der Kolben in Richtung der Zylinderachse der Außenwand bewegbar. Durch Bewegung des Kolbens kann also das Volumen der Mischkammer vergrößert und verkleinert werden. Insbesondere können durch Bewegung des Kolbens Medien in die Mischkammer hineingesaugt werden und/oder aus der Mischkammer herausgedrückt werden. Vorteilhafterweise grenzt ein Rand des Kolbens unmittelbar oder über eine Dichtung an die Innenfläche der Wand an.

Der Kolben kann vorteilhafterweise ein Entlüftungsventil aufweisen, durch welches in einem geöffneten Zustand Gas aus der Mischkammer entweichen kann und das gegen den Durchfluss von Gas und Medien verschließbar ist. Das Entlüftungsventil kann hierzu einen Kanal öffnen und schließen, der sich von einer der Mischkammer zugewandten Seite des Kolbens zu einer der Mischkammer abgewandten Seite des Kolbens erstreckt.

In einer vorteilhaften Ausgestaltung der Erfindung kann der Mischer, wie oben beschrieben, eine senkrecht auf der Zylinderachse der Außenfläche stehende Scheibe aufweisen, die Mischstrukturen enthält, durch welche Medien von einer Seite der Scheibe zur anderen Seite fließen können. Zur Minimierung von Totvolumina kann der Kolben vorteilhaft eine zur Zahl der Mischstrukturen gleiche Zahl an Formelementen aufweisen, die so an seiner dem Mischer zugewandten Seite angeordnet sind, dass sie die Mischstrukturen vollständig ausfüllen, wenn der Kolben an der Scheibe des Mischers anliegt.

Vorteilhafterweise können die Mischstrukturen sich in Richtung vom Kolben zur Stirnseite verjüngende Kanäle oder zylinderförmige Kanäle sein, wobei vorteilhafterweise die Mittelachsen der Kanäle parallel zur Zylinderachse der Außenfläche der Wand liegen.

Entsprechend können die Formelemente kegelförmig oder zylinderförmig ausgestaltet sein.

Um die vollständige Ausfüllung der Mischstrukturen durch die Formelemente zu gewährleisten, ist es vorteilhaft, wenn die Mischstrukturen aus Richtung des Kolbens gesehen keine Hinterschneidungen aufweisen. Vorteilhafterweise nähern sich also die Wände der Mischstrukturen vom Kolben aus gesehen in Richtung der dem Kolben gegenüberliegenden Stirnfläche der Mischkammer monoton an oder verlaufen parallel zueinander. Querschnitte der Mischstrukturen in einer Ebene, in der sich die Scheibe erstreckt, können in beispielsweise kreisförmig, sternförmig, kreuzförmig und dergleichen ausgestaltet sein.

Für bestimmte Anwendungen der Mischvorrichtung kann es vorteilhaft sein, wenn zwei, drei oder mehr der Zuleitungskanäle in der Wand vorgesehen sind. Es können dann mehrere Medien gleichzeitig in die Mischkammer eingebracht werden oder die Bewegungen zwischen der Einleitung eines Mediums und der Einleitung des nächsten Mediums minimiert werden.

In einer vorteilhaften Ausgestaltung der Erfindung kann die Wand einen Dichtzylinder aufweisen, der die Wand umgibt. Dabei kann die Außenfläche dieses Dichtzylinders zumindest einen Teil der zylinderförmigen Außenfläche der Wand bilden. Der zumindest eine Zuleitungskanal durchstößt dann vorteilhaft auch den Dichtzylinder. Es kann die Öffnung des Zuleitungskanals in der Außenfläche der Wand dann der einer Außenfläche des Dichtzylinders vorliegen.

Mit der erfindungsgemäßen Mischvorrichtung können Flüssigkeiten, Pasten, Pulver, Gase und andere Medien mischbar sein. Die Mischvorrichtung kann vorteilhaft automatisiert, beispielsweise nieder-, mittel- und hochviskose Medien und Gase mischen, und zum Beispiel in der Kosmetik-, Pharma-, Medizin- und Lebensmittelindustrie eingesetzt werden.

Erfindungsgemäß wird außerdem ein Verfahren zum Mischen von Medien angegeben, das mit einer Mischvorrichtung, wie sie vorstehend beschrieben wurde, durchgeführt wird.

Zur Durchführung des Verfahrens können in einer vorteilhaften Ausgestaltung das ringförmige Magazin und die Wand so zueinander bewegt werden, dass nacheinander die Öffnungen von mindestens zwei Kanälen in der Innenfläche des Magazins, zwischen denen zumindest eine weitere Öffnung des Kanals und des Magazins liegt, mit der Öffnung des zumindest einen Zuleitungskanals in der Außenfläche der Wand in einen medienleitenden Anschluss gebracht werden. Bei einer solchen Verfahrensdurchführung kann vorteilhaft die Öffnung des zumindest einen weiteren Kanals von der Öffnung des Zuleitungskanals bei der Bewegung von einer der zumindest zwei Öffnungen zu der anderen der zwei Öffnungen überstrichen werden und dabei ein Ventil, durch welches Medium in den zumindest einen weiteren Kanal geleitet wird, zumindest während des Überstreichens geschlossen werden.

Alternativ kann das Magazin gegenüber der Wand beim Bewegen von einer zur anderen Öffnung in Richtung der Zylinderachse der Außenwand verschoben werden, so dass die Öffnung des Zuleitungskanals beim Bewegen in Winkelrichtung um die Zylinderachse an der Öffnung des zumindest einen weiteren Kanals vorbeibewegt wird.

Das erfindungsgemäße Verfahren ist besonders vorteilhaft, aber nicht notwendig, wie folgt realisierbar. Es wird dabei ein Grundmaterial mit mehreren Zusatzmaterialien gemischt. Zur Mischung wird zunächst der Zuleitungskanal mit einem Kanal des Magazins in Anschluss gebracht, durch welchen ein Grundmaterial eingeleitet wird. Der Zuleitungskanal wird dann zu einem weiteren Kanal des Magazins bewegt, durch den ein erstes Zusatzmaterial eingeleitet wird. Anschließend wird der Zuleitungskanal zurück zu jenem Kanal des Magazins bewegt, durch den das Grundmaterial eingeleitet wird und es wird etwas Grundmaterial eingeleitet, so dass der Zuleitungskanal vom ersten Zusatzmaterial gereinigt wird. Anschließend kann dann der Zuleitungskanal zu einem dritten Kanal des Magazins bewegt werden, durch den ein zweites Zusatzmaterial eingeleitet wird. Anschließend kann der Zuleitungskanal wieder zurückbewegt werden zum ersten Kanal, durch den Grundmaterial eingeleitet wird, um den Zuleitungskanal mittels Grundmaterial zu reinigen. Bei Bedarf kann dieser Vorgang mit weiteren Zusatzmaterialien beliebig oft wiederholt werden. Es wird stets der Zuleitungskanal mit dem Kanal für Grundmaterial in Anschluss gebracht und dann ein Kanal für ein Zusatzmaterial mit dem Zuleitungskanal in Anschluss gebracht. Anschließend wird zur Reinigung wieder der Kanal des Grundmaterials mit dem Zuleitungskanal in Anschluss gebracht.

Ist die Mischung nicht kontaminationskritisch, so kann das Verfahren vorteilhaft auch wie folgt ausgeführt werden. Es wird dabei ein Grundmaterial mit mehreren Zusatzmaterialien gemischt. Zur Mischung wird auch hier zunächst der Zuleitungskanal mit einem Kanal des Magazins in Anschluss gebracht, durch welchen ein Grundmaterial eingeleitet wird. Der Zuleitungskanal wird dann zu einem weiteren Kanal des Magazins bewegt, durch den ein erstes Zusatzmaterial eingeleitet wird. Anschließend kann dann der Zuleitungskanal, ohne vorher zum ersten Kanal bewegt zu werden, zu einem dritten Kanal des Magazins bewegt werden, durch den ein zweites Zusatzmaterial eingeleitet wird. Anschließend kann der Zuleitungskanal optional wieder zurückbewegt werden zum ersten Kanal, durch den Grundmaterial eingeleitet wird, um den Zuleitungskanal mittels Grundmaterial zu reinigen. Bei Bedarf kann auch dieser Vorgang mit weiteren Zusatzmaterialien beliebig oft wiederholt werden.

Der Vorgang des Einleitens von Medium durch die Kanäle kann jeweils wie folgt aussehen. Zunächst kann der besagte Mischer an der besagten Stirnfläche der Mischkammer anliegen und der Kolben an den Mischer anliegen, wobei sich Formelemente des Kolbens in Mischstrukturen des Mischers befinden können. In diesem Zustand hat die Mischkammer ein Volumen von im Wesentlichen Null. Es kann nun der Zuleitungskanal mit einem der Kanäle des Magazins in medienleitenden Anschluss gebracht werden und das entsprechende Medium in die Mischkammer eingeleitet werden. Hierbei bewegen sich der Kolben und der Mischer von der Stirnfläche um einen solchen Betrag weg, dass sich das Volumen der Mischkammer auf das Volumen des eingeleiteten Mediums vergrößert. Es kann dann ein weiterer Kanal des Magazins mit dem Zuleitungskanal in medienleitenden Anschluss gebracht werden und wiederum ein entsprechendes Medium in die Mischkammer eingeleitet werden. Der Kolben und der Mischer können sich wiederum von der Stirnfläche der Mischkammer so weg bewegen, dass sich das Volumen der Mischkammer um das Volumen des zugeleiteten Mediums vergrößert.

In einer alternativen Ausgestaltung kann auch der Kolben vor Einleiten des ersten Mediums bereits beabstandet von der Stirnfläche vorliegen. Während des Einleitens von Medium kann dann ein Belüftungsventil im Kolben geöffnet werden. Auf diese Weise kann durch das eingeleitete Medium Luft aus der Mischkammer durch das Ventil im Kolben herausgedrückt werden.

In beiden Ausgestaltungen der Medienzufuhr kann, nachdem alle Medien zugeführt sind, der Mischer in Richtung der Zylinderachse der Außenfläche der Wand bewegt werden, wodurch die Medien in der Mischkammer vermischt werden. Nach Abschluss des Vermischungsvorgangs kann der Inhalt der Mischkammer, also die vermischten Medien, beispielsweise durch eine Öffnung in der Stirnfläche, ausdosiert werden. Hierzu kann der Kolben in Richtung der Stirnfläche bewegt werden. Liegen zum Schluss der Mischer und der Kolben und die Stirnfläche aneinander an, so ist die Mischkammer vollständig entleert.

Im Folgenden soll die Erfindung anhand einiger Figuren beispielhaft erläutert werden. Gleiche Bezugszeichen kennzeichnen dabei gleiche oder entsprechende Merkmale. Die in den Beispielen gezeigten Merkmale können auch zwischen den Beispielen kombiniert und unabhängig vom konkreten Beispiel realisiert werden. Merkmale, die in einer Vielzahl auftreten, werden nur teilweise mit Bezugszeichen gekennzeichnet, um die Übersichtlichkeit zu erhöhen. Die für die gekennzeichneten Merkmale gemachten Aussagen gelten auch für die anderen gleichartigen Merkmale.

Es zeigt
- Figur 1:: einen Schnitt durch eine nicht erfindungsgemäße Mischvorrichtung,
- Figur 2:: verschiedene Ausgestaltungen eines Magazins,
- Figur 3:: eine Vorrichtung zur Bewegung des Magazins gegenüber der Wand, und
- Figur 4:: einen Schnitt durch die in Figur 3 gezeigte Vorrichtung.

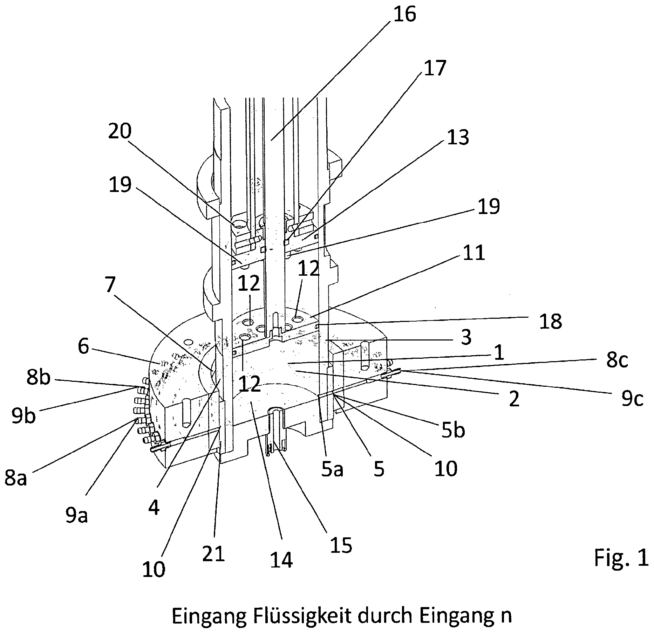

Figur 1 zeigt eine Mischvorrichtung. Die Mischvorrichtung weist eine Mischkammer 1 auf, die durch eine Innenfläche 2 einer Wand 3 begrenzt wird. Die Wand 3 weist außerdem eine zylinderförmige Außenfläche 4 auf. Die Wand 3 enthält zumindest einen Zuleitungskanal 5, der einerseits mit einer Öffnung 5a in der Innenfläche 2 der Wand endet und andererseits mit einer Öffnung 5b in der zylinderförmigen Außenfläche 4 der Wand 3 endet.

Die Mischvorrichtung weist außerdem ein Magazin 6 auf, das eine zylinderförmige Innenfläche 7 hat, deren Zylinderachse koaxial zu einer Zylinderachse der zylinderförmigen Außenfläche 4 der Wand 3 liegt.

Das Magazin 6 weist eine Vielzahl von Kanälen 8a, 8b, 8c auf, die sich jeweils von einem Anschluss 9a, 9b, 9c zu jeweils einer Öffnung 10 in der zylinderförmigen Innenfläche 7 des Magazins 6 erstrecken.

Das Magazin 6 und die Wand 3 sind so zueinander bewegbar, dass die Öffnungen 10 der Vielzahl von Kanälen 8a, 8b, 8c in der Innenfläche 7 des Magazins 6 jeweils mit der Öffnung 5b des Zuleitungskanals 5 in der Außenfläche 4 der Wand 3 in einen medienleitenden Anschluss bringbar sind.

Im in Figur 1 gezeigten Beispiel weist die Mischvorrichtung außerdem einen Mischer 11 auf, der in der Mischkammer 1 zum Mischen von Medien entlang der Zylinderachse der Außenfläche 4 der Wand 3 bewegbar ist. Der Mischer 11 weist Mischstrukturen 12 auf, durch welche Medium von einer Seite einer Scheibe des Mischers 11 zur anderen Seite fließen kann.

Im in Figur 1 gezeigten Beispiel sind die Mischstrukturen 12 zylinderförmige Bohrungen durch die Platte des Mischers 11 mit zur Zylinderachse der Außenfläche 4 parallelen Zylinderachsen.

Die Mischvorrichtung weist im gezeigten Beispiel außerdem einen Kolben 13 auf, der entlang der Zylinderachse der Außenfläche 4 der Wand 3 bewegbar ist. Zusammen mit einer festen Stirnfläche 14 begrenzt der Kolben 13 die Mischkammer 1. Die Platte 11 des Mischers bewegt sich zwischen dem Kolben 13 und der Stirnfläche 14.

Zum Dosieren von in der Mischkammer 1 vorhandenen Medien weist die Mischvorrichtung im gezeigten Beispiel eine Öffnung 15 in der Stirnfläche 14 auf. Durch diese Öffnung können in der Mischkammer 1 vorhandene Medien mittels des Kolbens 13 ausgeleitet werden. Im gezeigten Beispiel ist die Öffnung 15 in der Mitte der Stirnfläche 14 angeordnet.

Der Mischer 11 wird im in Figur 1 gezeigten Beispiel mittels einer Stange 16 bewegt, die am Mischer 11 auf jener der Stirnfläche 14 abgewandten Seite mittig angeordnet ist. Die Stange 16 erstreckt sich durch eine zentrale Öffnung im Kolben 13. Die Öffnung ist durch Dichtelemente 17 gegen den Durchtritt von Medien abgedichtet.

Der Mischer 11 ist im gezeigten Beispiel vorteilhaft mittels eines Dichtrings 18 gegen die Wand 2 abgedichtet, welche die Mischkammer 1 begrenzt.

Der Kolben 13 weist auf seiner der Mischkammer und dem Mischer 11 zugewandten Seite Formelemente 19 auf, die so ausgestaltet sind, dass wenn die Platte 11 des Mischers an dem Kolben 13 anliegt, die Formelemente 19 die Mischstrukturen 12 vollständig ausfüllen.

Der Kolben 13 weist im gezeigten Beispiel außerdem ein Belüftungsventil 20 auf, das sich von jener die Mischkammer begrenzenden Seite des Kolbens 13 zu jener der Mischkammer 1 abgewandten Seite des Kolbens 13 erstreckt und gegen den Durchfluss von Gasen und Medien verschließbar ist.

Im gezeigten Beispiel ist zwischen der Wand 3 und der Innenfläche 7 des Magazins 6 ein Dichtring 21 angeordnet, der die Wand 3 anliegend umläuft und an der Innenwand 7 des Magazins anliegt. Das Dichtelement 21 kann hier auch als Teil der Wand 3 angesehen werden. Der Kanal 5 erstreckt sich also durch einen inneren Teil der Wand 3, der der Mischkammer 1 zugewandt ist sowie durch das Dichtelement 21 bis zur Öffnung 5b, wo der Zuleitungskanal an die Innenfläche 7 des Magazins oder eine Öffnung 10 eines Kanals 8a, 8b, 8c angrenzt.

Im in Figur 1 gezeigten Beispiel ist das Magazin 6 als Ring mit quadratischem Querschnitt ausgestaltet. Die Kanäle 8a, 8b, 8c sind gerade und verlaufen in radialer Richtung durch den ringförmigen Körper des Magazins 6. Die einzelnen Kanäle sind im Figur 1 gezeigten Beispiel in der gemeinsamen Ebene, die senkrecht zur Zylinderachse der Innenfläche 2 der Wand 3 steht, und äquidistant zueinander angeordnet.

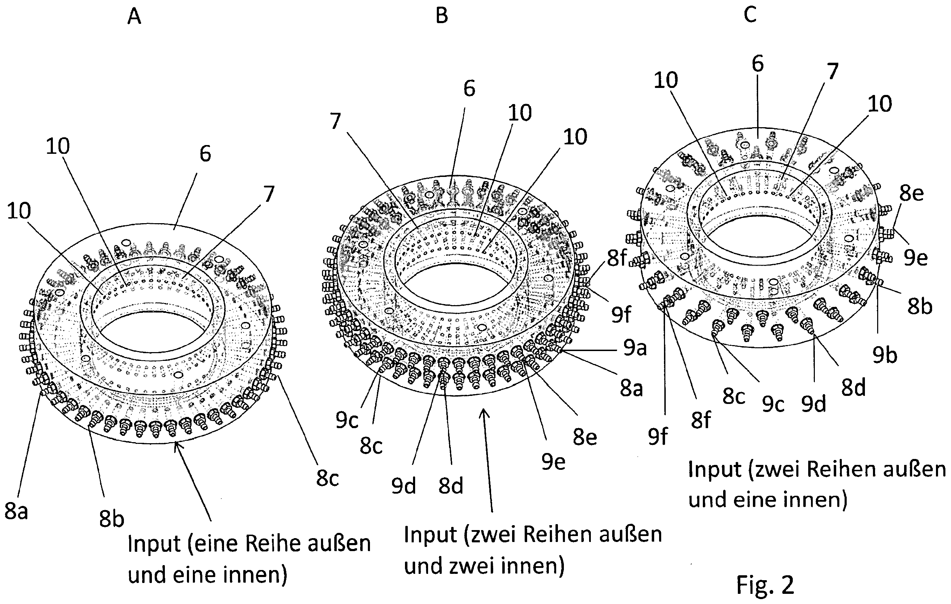

Figur 2 zeigt verschiedene mögliche Ausgestaltungen des Magazins 6, Figur 2B zeigt eine Ausgestaltung des Magazins 6, wie sie in der Erfindung zur Anwendung kommt. Die in Figur 2A gezeigte Ausgestaltung entspricht der in Figur 1 gezeigten. Alle Kanäle 8a, 8b, 8c sind in einer gemeinsamen Ebene angeordnet und in Winkelrichtung äquidistant zueinander. Insbesondere liegen alle Öffnungen 10 der Vielzahl von Kanälen des Magazins in der Innenfläche 7 in einer gemeinsamen Ebene, die senkrecht zur Zylinderachse der zylinderförmigen Au-βenfläche 4 der Wand 3 steht.

Figur 2B zeigt eine erfindungsgemäße Ausgestaltung des Magazins 6, bei dem die Vielzahl von Kanälen 8a, 8b, 8c, 8d, 8e, 8f in genau zwei gemeinsamen Ebenen angeordnet sind, die senkrecht zur Zylinderachse der zylinderförmigen Außenfläche 4 der Wand 3 stehen. Es können hier doppelt so viele Kanäle wie in Figur 2A vorgesehen werden. Durch eine solche Anordnung der Kanäle 8a bis 8f können bei gegebenem Umfang des Magazins 6 mehr Kanäle 8a bis 8f vorgesehen werden, als bei einer Anordnung in nur einer Ebene. Sowohl die Öffnungen 10 als auch die Anschlüsse 9a bis 9f sind hier auf zwei Ebenen verteilt. In Richtung parallel zur Zylinderachse liegen im in Figur 2B gezeigten Beispiel jeweils zwei Kanäle nebeneinander.

Figur 2C zeigt eine weitere mögliche Ausgestaltung eines Magazins 6. Im in Figur 2C gezeigten Beispiel sind die Anschlüsse der Kanäle 8a bis 8f in genau zwei Ebenen angeordnet. Jene der Wand 3 zugewandten Öffnungen 10 in der Innenfläche 7 des Magazins 6 sind jedoch in genau einer gemeinsamen Ebene angeordnet. Soll die Dichte der Öffnungen 10 in der Innenfläche 7 des Magazins 6 gegenüber einer Anordnung der Anschlüsse 9a bis 9f in einer Ebene, wie in Figur 2A gezeigt, nicht erhöht werden, so können, wie in Figur 2C gezeigt, in einer Winkelrichtung jeweils nur ein Anschluss 9a bis 9f angeordnet sein. Die Anschlüsse der benachbarten Ebenen sind in Winkelrichtung zueinander versetzt.

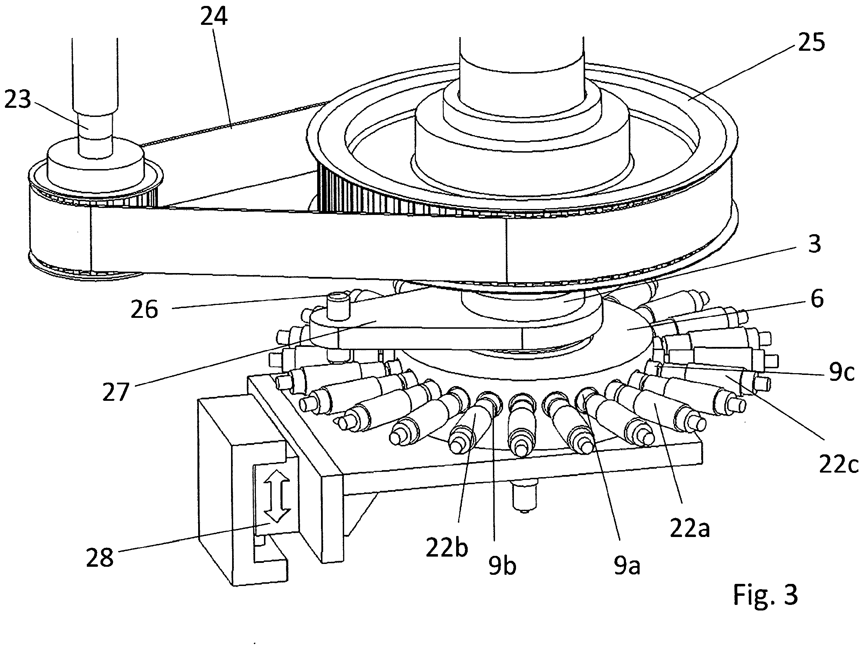

Figur 3 zeigt eine Mischvorrichtung, bei welcher der Zufluss von Medien durch die Kanäle 8a bis 8f mittels Magnetventilen 22a, 22b und 22c, gesteuert wird. In dieser Ausgestaltung können alle Auslassöffnungen 10 in der Innenfläche 7 des Magazins 6 in einer Ebene angeordnet sein, da beim Überfahren von Öffnungen 10 durch den Zuleitungskanal 5 nur Medium in den Zuleitungskanal 5 gelangt, wenn das entsprechende Ventil 22a, 22b oder 22c geöffnet ist.

Im in Figur 3 gezeigten Beispiel ist das Magazin 6 gegenüber der Wand 3 mittels eines Antriebs 23 drehbar, dessen Drehmoment mittels eines Riemens 24 auf ein die Wand 3 umgebendes Abtriebsrad 25 übertragen wird. Im gezeigten Beispiel weist die Vorrichtung zur Steuerung der Magnetventile 22a, 22b und 22c einen Magneten 26 auf, der an einem Arm 27 angeordnet ist. Der Arm 27 ist mit der Wand 3 der Mischkammer fest verbunden und wird bei Drehung der Wand 3 mit dieser mitbewegt. Von der Mischkammer 1 aus gesehen kann der Magnet 26 in jener Winkelrichtung angeordnet sein, in die sich der Zuleitungskanal 5 erstreckt. Auf diese Weise kann durch den Magneten 26 jenes Magnetventil 22a, 22b, 22c geöffnet werden, das den Kanal verschließt, der mit dem Zuleitungskanal 5 in medienleitendem Anschluss ist.

Im in Figur 3 gezeigten Beispiel weist die Mischvorrichtung eine Translationsvorrichtung 28 auf, mittels derer das Magazin 6 in axialer Richtung in Richtung der Zylinderachse der der Wand 3 verschiebbar ist. Durch diese Verschiebung in Richtung der Zylinderachse kann zum einen erreicht werden, dass der Magnet 26 nicht auf solche Magnetventile wirkt, die beim Ansteuern eines Zuleitungskanals 8a, 8b, 8c überfahren werden, aus denen jedoch kein Medium in die Mischkammer 1 eingeleitet werden soll. Darüber hinaus kann durch eine solche Verschiebung bewirkt werden, dass die Öffnung 5b, wie in Figur 1 gezeigt, an solchen Öffnungen 10 von Kanälen 8a bis 8f vorbeibewegt wird, aus denen kein Medium in die Mischkammer 1 geleitet werden soll.

Es sei darauf hingewiesen, dass sich eine Ausgestaltung wie in Figur 3 gezeigt ohne Weiteres auch so realisieren lässt, dass die Wand 3 axial verschoben wird und das Magazin 9 durch eine Antriebsvorrichtung 23 gedreht wird.

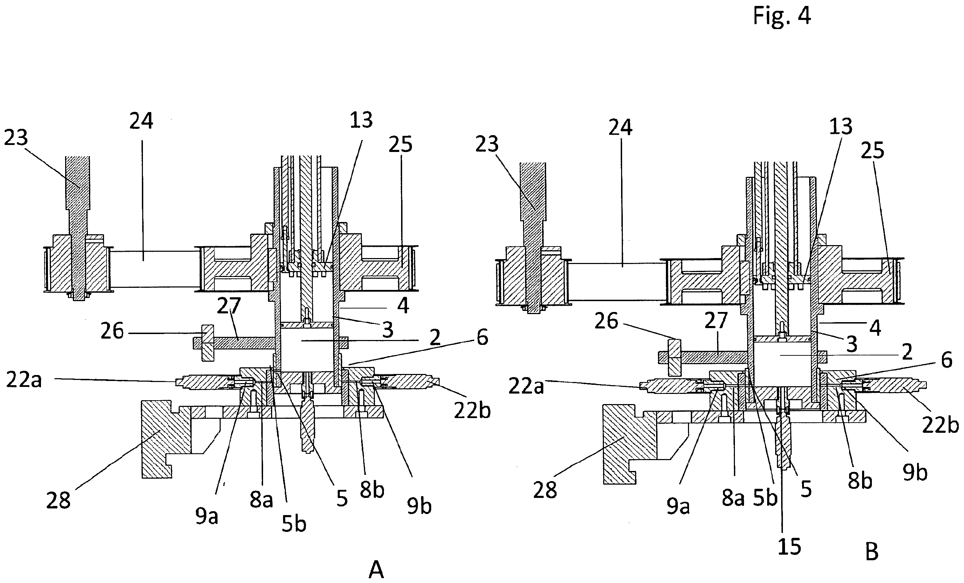

Figur 4 zeigt die in Figur 3 gezeigte Ausgestaltung im Schnitt. Der innere Teil der Mischvorrichtung innerhalb der Anschlüsse 9a, 9b und der Wand 3 entspricht dem in Figur 1 gezeigten Beispiel, so dass auf die Beschreibung dort verwiesen wird.

Die Antriebsvorrichtung 23 mit Keilriemen 24 und Abtriebsrad 25 entspricht der in Figur 3 gezeigten Ausführung. Ebenso sind die Ventile 22a, 22b und der Magnet 26 wie in Figur 3 gezeigt ausgebildet.

Figur 4A zeigt die in Figur gezeigte Ausgestaltung der Mischvorrichtung in einem Zustand, bei dem kein Medium in den Zuleitungskanal 5 eingeführt wird. Hierzu wird das Magazin 6 in Richtung der Zylinderachse der Wand 3 nach unten, d. h. vom Kolben 13 weg verschoben. Hierdurch liegt die Öffnung 5b des Zuleitungskanals 5 in axialer Richtung oberhalb des Kanals 8a. Außerdem ist der Magnet 26 so weit vom entsprechenden Magnetventil 22a entfernt, dass dieses geschlossen bleibt. In dieser Position kann die Mischkammer mit der Wand 3 um die Zylinderachse gedreht werden und zu einem Kanal 8a, 8b bewegt werden, ohne andere Kanäle 8a, 8b zu überstreichen.

In Figur 4B wurde nun gegenüber Figur 4A das Magazin 6 in axialer Richtung auf den Kolben 13 zubewegt, so dass der Kanal 8a an die Öffnung 5b des Zuleitungskanals anschließt und der Kanal 8a mit dem Zuleitungskanal 5 in medienleitendem Anschluss ist. Dabei wurde das Ventil 22a auf den Magneten 26 zu bewegt, wodurch das Magnetventil 22a des Kanals 8a geöffnet wird.

In der in den Figuren 3 und 4 gezeigten Vorrichtung kann jeder beliebige der Kanäle 8a, 8b, 8c angefahren werden, ohne andere Kanäle 8a, 8b, 8c zu überstreichen. Hierzu wird das Magazin 6 gegenüber der Wand 3 in axialer Richtung verschoben, dann um die Zylinderachse der Wand 3 gedreht und, wenn der Zuleitungskanal über dem anzugsteuernden Kanal 8a, 8b, 8c liegt, in axialer Richtung zurückverschoben.

Die Medien sind den Anschlüssen 9a bis 9f der Kanäle 8a bis 8f im Magazin 6 beispielsweise über Schläuche zuführbar. Sie können zum Beispiel mittels Pumpen mit Druck beaufschlagt werden, so dass sie bis zum entsprechenden Ventil unter Druck vorliegen und bei Öffnen des Ventils durch dieses hindurchtreten.

Die Forschungsarbeiten, die zu diesen Ergebnissen geführt haben, wurden von der Europäischen Union gefördert.

Die Erfindung kann die folgenden, vorteilhaften Aspekte aufweisen:
Das Magazin der Mischvorrichtung kann zumindest 4 der Kanäle, vorzugsweise zumindest 8 der Kanäle, vorzugsweise zumindest 12 der Kanäle enthalten.

Der Mischer der Mischvorrichtung kann eine senkrecht auf der Zylinderachse der Außenfläche stehende Scheibe aufweisen, die Mischstrukturen enthält, durch welche Medium von einer Seite der Scheibe zur anderen Seite fließen kann.

Die Mischvorrichtung kann einen Kolben aufweisen, der die Mischkammer auf einer Seite in Richtung der Zylinderachse der Außenwand, die einer gegenüber der Außenwand festen Stirnfläche der Mischkammer gegenüber liegt, begrenzt, und der in Richtung der Zylinderachse der Außenwand bewegbar ist.

Die Mischvorrichtung kann zwei oder drei der Zuleitungskanäle aufweisen.

Die Medien der Mischvorrichtung können Flüssigkeiten, Pasten, Pulver und/oder Gase sein.

## Patentansprüche

1. Mischvorrichtung mit
einer durch eine Innenfläche (2) einer Wand (3) begrenzten Mischkammer (1), wobei die Wand (3) außerdem eine zylinderförmige Außenfläche (4) aufweist,
wobei die Wand (3) zumindest einen Zuleitungskanal (5) aufweist, der einerseits mit einer Öffnung (5b) in der zylinderförmigen Außenfläche (4) der Wand (3) und andererseits mit einer Öffnung (5a) in der Innenfläche (2) der Wand (3) endet,
wobei die Mischvorrichtung weiter
ein Magazin (6) aufweist, das eine zylinderförmige Innenfläche hat, deren Zylinderachse koaxial zu einer Zylinderachse der zylinderförmigen Außenfläche (4) der Wand (3) liegt,
wobei das Magazin (6) eine Vielzahl von Kanälen (8a, 8b, 8c) enthält, die sich jeweils von jeweils einem Anschluss (9a, 9b, 9c) zu jeweils einer Öffnung (10) in der zylinderförmigen Innenfläche (7) des Magazins (6) erstrecken,
wobei das Magazin (6) und die Wand (3) so zueinander bewegbar sind, dass die Öffnungen (10) der Vielzahl von Kanälen in der Innenfläche (7) des Magazins (6) jeweils mit der Öffnung (5b) des zumindest einen Zuleitungskanals (5) in der Außenfläche (4) der Wand (3) in einen medienleitenden Anschluss (9a, 9b, 9c) bringbar sind,
**dadurch gekennzeichnet, dass**
die Mischvorrichtung außerdem einen Mischer (11) aufweist,
der in der Mischkammer (1) zum Mischen von Medien entlang der Zylinderachse der Außenfläche (4) der Wand (3) bewegbar ist, und, dass
die Öffnungen (10) der Vielzahl von Kanälen (8a, 8b, 8c) des Magazins (6) in der Innenfläche des Magazins (6) in genau zwei oder genau drei Ebenen angeordnet sind, die senkrecht zur Zylinderachse der zylinderförmigen Außenfläche (4) der Wand (3) stehen.

2. Mischvorrichtung nach dem vorhergehenden Anspruch,
wobei die Öffnung (5a) des zumindest einen Zuleitungskanals (5) in der Innenfläche (2) der Wand (3) an eine von der Innenfläche (2) der Wand (3) umlaufene und bezüglich der Wand (3) feste Stirnfläche (14) der Mischkammer (1) angrenzt.

3. Mischvorrichtung nach einem der vorhergehenden Ansprüche,
wobei das Magazin ringförmig ist und das ringförmige Magazin und die Wand (3) um die Zylinderachse der Außenfläche (4) der Wand (3) gegeneinander drehbar sind und/oder in Richtung der Zylinderachse der Außenfläche (4) der Wand (3) gegeneinander verschiebbar sind.

4. Mischvorrichtung nach einem der vorhergehenden Ansprüche, aufweisend einen Auslass, der in einer gegenüber der Wand (3) festen und zur Zylinderachse der Außenfläche (4) senkrechten Stirnfläche (14) der Mischkammer (1) angeordnet ist und durch den Medien aus der Mischkammer (1) ableitbar sind.

5. Mischvorrichtung nach einem der vorhergehenden Ansprüche, aufweisend einen Kolben (13), der die Mischkammer auf einer Seite in Richtung der Zylinderachse der Außenwand, die einer gegenüber der Außenwand festen Stirnfläche (14) der Mischkammer (1) gegenüber liegt, begrenzt, und der in Richtung der Zylinderachse der Außenwand bewegbar ist, wobei der Kolben (13) ein Entlüftungsventil aufweist, durch welches in einem geöffneten Zustand Gas aus der Mischkammer (1) entweichen kann und das gegen den Durchfluss von Gas und Medium verschließbar ist.

6. Mischvorrichtung nach dem vorhergehenden Anspruch, wobei der Mischer (11) eine senkrecht auf der Zylinderachse der Außenfläche (4) stehende Scheibe aufweist, die Mischstrukturen (12) enthält, durch welche Medium von einer Seite der Scheibe zur anderen Seite fließen kann,
wobei der Kolben (13) eine zur Zahl der Mischstrukturen (12) gleiche Zahl an Formelementen (19) aufweist, die so an seiner dem Mischer (11) zugwandten Seite des Kolbens (13) angeordnet sind, dass sie die Mischstrukturen (12) vollständig ausfüllen, wenn der Kolben (13) an der Scheibe des Mischers (11) anliegt.

7. Mischvorrichtung nach dem vorhergehenden Anspruch, wobei die Mischstrukturen (12) sich in Richtung vom Kolben (13) zur Stirnseite verjüngende Kanäle oder Kanäle mit parallelen Wänden sind, deren Achsen parallel zur Zylinderachse der Außenfläche (4) der Wand (3) liegen.

8. Mischvorrichtung nach einem der vorhergehenden Ansprüche, aufweisend jeweils ein Ventil (22a, 22b, 22c) für jeden der Kanäle (8a, 8b, 8c) des Magazins (6), durch welches Ventil (22a, 22b, 22c) ein Medium in den entsprechenden Kanal (8a, 8b, 8c) leitbar ist und mit dem der Zufluss des Mediums in den entsprechenden Kanal (8a, 8b, 8c) regulierbar ist.

9. Mischvorrichtung nach einem der vorhergehenden Ansprüche,
wobei die Wand (3) einen Dichtzylinder aufweist, der die Mischkammer (1) umgibt,
wobei die Außenfläche des Dichtzylinders zumindest einen Teil der zylinderförmigen Außenfläche (4) der Wand (3) bildet und wobei der zumindest eine Zuleitungskanal (5) eine Zylinderwand des Dichtzylinders durchstößt.

10. Verfahren zum Mischen von Medien wobei das Verfahren mit einer Mischvorrichtung nach einem der vorhergehenden Ansprüche durchgeführt wird.

11. Verfahren zum Mischen von Medien nach dem vorhergehenden Anspruch,
wobei das ringförmige Magazin (6) und die Wand (3) so zueinander bewegt werden, dass nacheinander die Öffnungen (10) von zumindest zwei Kanälen (8a, 8b, 8c) in der Innenfläche (7) des Magazins (6), zwischen denen zumindest eine weitere Öffnung (10) eines Kanals (8a, 8b, 8c) des Magazins (6) liegt, mit der Öffnung (5b) des zumindest einen Zuleitungskanals (5) in der Außenfläche (4) der Wand (3) in einen medienleitenden Anschluss gebracht werden,
wobei entweder die Öffnung (10) des zumindest einen weiteren Kanals (8a, 8b, 8c) von der Öffnung (5b) des Zuleitungskanals (5) bei der Bewegung von einer der zumindest zwei Öffnungen (10) zur anderen der zumindest zwei Öffnungen (10) überstrichen wird, und ein Ventil (22a, 22b, 22c), durch welches Medium in den zumindest einen weiteren Kanal (8a, 8b, 8c) leitbar ist, zumindest während des Überstreichens geschlossen wird,
oder das Magazin (6) gegenüber der Wand (3) beim Bewegen von einer zur anderen Öffnung (10) in Richtung der Zylinderachse der Au-βenwand bewegt wird, so dass es beim Bewegen in Winkelrichtung um diese Zylinderachse an der Öffnung (10) des zumindest einen weiteren Kanals (8a, 8b, 8c) vorbeibewegt wird.

12. Verfahren nach einem der beiden vorhergehenden Ansprüche,
wobei in einem ersten Schritt die Öffnung (5a) des Zuleitungskanals (5) mit einem Kanal (8a, 8b, 8c) des Magazins (6) in Anschluss gebracht wird, aus dem ein Grundmaterial in die Mischkammer (1) eingeleitet wird,
in einem zweiten Schritt der Zuleitungskanal (5) mit einem Kanal (8a, 8b, 8c) des Magazins (6) in Anschluss gebracht wird, durch den ein erstes Zusatzmaterial in die Mischkammer (1) eingeleitet wird,
in einem dritten Schritt der Zuleitungskanal (5) mit einem Kanal (8a, 8b, 8c) des Magazins (6) in Anschluss gebracht wird, durch den ein zweites Zusatzmaterial in die Mischkammer (1) eingeleitet wird, und in einem vierten Schritt der Zuleitungskanal (5) wieder mit dem Kanal (8a, 8b, 8c) des Magazins (6) in Anschluss gebracht wird, durch den das Grundmaterial in die Mischkammer (1) eingeleitet wird.

13. Verfahren nach dem vorhergehenden Anspruch, wobei in einem Schritt, der zwischen dem zweiten und dem dritten Schritt durchgeführt wird, der Zuleitungskanal (5) wieder mit dem Kanal (8a, 8b, 8c) des Magazins (6) in Anschluss gebracht wird, durch den das Grundmaterial in die Mischkammer (1) eingeleitet wird.

14. Verfahren einem der beiden vorhergehenden Ansprüche, wobei der zweite Schritt und vorteilhaft auch der Schritt zwischen dem zweiten und dem dritten Schritt für zumindest ein weiteres Zusatzmaterial wiederholt wird.

## Claims

1. A mixing device with
a mixing chamber (1) bounded by an inner surface (2) of a wall (3), the wall (3) additionally having a cylindrical outer surface (4),
the wall (3) comprising at least one feed duct (5) that one the one hand ends with an opening (5b) in the cylindrical outer surface (4) of the wall (3) and on the other hand ends with an opening (5a) in the inner surface (2) of the wall (3),
the mixing device further comprising
a magazine (6) that has a cylindrical inner surface, the cylinder axis of which is coaxial with respect to a cylinder axis of the cylindrical outer surface (4) of the wall (3),
the magazine (6) including a plurality of ducts (8a, 8b, 8c), which each extend from a respective connection (9a, 9b, 9c) to a respective opening (10) in the cylindrical inner surface (7) of the magazine (6),
the magazine (6) and the wall (3) being movable with respect to one another in such a way that the openings (10) of the plurality of ducts in the inner surface (7) of the magazine (6) can be made to establish a media-conducting connection (9a, 9b, 9c) to the opening (5b) of the at least one feed duct (5) in the outer surface (4) of the wall (3),
**characterized in that in that** the mixing device additionally comprises a mixer (11) that is movable in the mixing chamber (1) along the cylinder axis of the outer surface (4) of the wall (3) for mixing media, and that the openings (10) of the plurality of ducts (8a, 8b, 8c) of the magazine (6) are arranged in the inner surface of the magazine (6) in exactly two or exactly three planes, which are perpendicular to the cylinder axis of the cylindrical outer surface (4) of the wall (3).

2. The mixing device according to the preceding claim,
wherein the opening (5a) of the at least one feed duct (5) in the inner surface (2) of the wall (3) abuts an end face (14) of the mixing chamber (1) which is surrounded by the inner surface (2) of the wall (3) and fixed with respect to the wall (3).

3. The mixing device according to any one of the preceding claims,
wherein the magazine is annular, and the annular magazine and the wall (3) are rotatable with respect to one another about the cylinder axis of the outer surface (4) of the wall (3) and/or are displaceable with respect to one another in the direction of the cylinder axis of the outer surface (4) of the wall (3).

4. The mixing device according to any one of the preceding claims, comprising an outlet which is arranged in an end face (14) of the mixing chamber (1) that is fixed with respect to the wall (3) and perpendicular to the cylinder axis of the outer surface (4), and through which media can be discharged from the mixing chamber (1).

5. The mixing device according to any one of the preceding claims, comprising a piston (13), which bounds the mixing chamber on one side in the direction of the cylinder axis of the outer wall which is located opposite an end face (14) of the mixing chamber (1) that is fixed with respect to the outer wall, and which is movable in the direction of the cylinder axis of the outer wall, the piston (13) including a vent valve through which, in an open state, gas can escape from the mixing chamber (1) and which is closable with respect to the throughflow of gas and medium.

6. The mixing device according to the preceding claim, wherein the mixer (11) comprises a disk that is located perpendicularly on the cylinder axis of the outer surface (4) and includes mixing structures (12) through which medium can flow from one side of the disk to the other side,
the piston (13) comprising a number of shaped elements (19) equal to the number of mixing structures (12), which are arranged on the side of the piston (13) facing the mixer (11) so as to completely fill the mixing structures (12) when the piston (13) bears against the disk of the mixer (11).

7. The mixing device according to the preceding claim, wherein the mixing structures (12) are ducts that narrow in the direction from the piston (13) to the end side, or ducts that comprise parallel walls, the axes of which are parallel to the cylinder axis of the outer surface (4) of the wall (3).

8. The mixing device according to any one of the preceding claims, comprising respectively a valve (22a, 22b, 22c) for each of the ducts (8a, 8b, 8c) of the magazine (6), through which valve (22a, 22a, 22c) a medium can be conducted into the corresponding duct (8a, 8b, 8c) and by way of which the inflow of the medium into the corresponding duct (8a, 8b, 8c) can be regulated.

9. The mixing device according to any one of the preceding claims,
wherein the wall (3) comprises a sealing cylinder that surrounds the mixing chamber (1),
the outer surface of the sealing cylinder forms at least a portion of the cylindrical outer surface (4) of the wall (3), and
the at least one feed duct (5) passes through a cylinder wall of the sealing cylinder.

10. A method for mixing media, the method being carried out using a mixing device according to any one of the preceding claims.

11. The method for mixing media according to the preceding claim,
wherein the annular magazine (6) and the wall (3) are moved with respect to one another in such a way that the openings (10) of at least two ducts (8a, 8b, 8c) in the inner surface (7) of the magazine (6), between which at least one further opening (10) of a duct (8a, 8b, 8c) of the magazine (6) is located, are made to successively establish a medium-conducting connection to the opening (5b) of the at least one feed duct (5) in the outer surface (4) of the wall (3),
wherein either the opening (10) of the at least one further duct (8a, 8b, 8c) is passed over by the opening (5b) of the feed duct (5) during the movement from one of the at least two openings (10) to the other of the at least two openings (10), and a valve (22a, 22b, 22c), through which medium can be conducted into the at least one further duct (8a, 8b, 8c), is closed at least during the passing over,
or the magazine (6) is moved with respect to the wall (3) in the direction of the cylinder axis of the outer wall during the movement from one opening to the other (10), so that it is moved past the opening (10) of the at least one further duct (8a, 8b, 8c) during the movement in the angular direction about this cylinder axis.

12. The method according to one of the two preceding claims, wherein, in a first step, the opening (5a) of the feed duct (5) is made to establish a connection to a duct (8a, 8b, 8c) of the magazine (6) from which a basic material is introduced into the mixing chamber (1);
in a second step, the feed duct (5) is made to establish a connection to a duct (8a, 8b, 8c) of the magazine (6) through which a first additional material is introduced into the mixing chamber (1);
in a third step, the feed duct (5) is made to establish a connection to a duct (8a, 8b, 8c) of the magazine (6) through which a second additional material is introduced into the mixing chamber (1); and in a fourth step, the feed duct (5) is again made to establish a connection to the duct (8a, 8b, 8c) of the magazine (6) through which the basic material is introduced into the mixing chamber (1).

13. The method according to the preceding claim, wherein, in a step that is carried out between the second and the third step, the feed duct (5) is again made to establish a connection to the duct (8a, 8b, 8c) of the magazine (6) through which the basic material is introduced into the mixing chamber (1).

14. The method to one of the two preceding claims,
wherein the second step, and advantageously also the step between the second and the third step, are repeated for at least one further additional material.

## Revendications

1. Dispositif de mélange comprenant
une chambre de mélange (1) délimitée par une surface intérieure (2) d'une paroi (3), dans lequel la paroi (3) présente en outre une surface extérieure cylindrique (4),
dans lequel la paroi (3) comprend au moins un canal d'amenée (5) qui se termine d'un côté par une ouverture (5b) dans la surface extérieure cylindrique (4) de la paroi (3) et de l'autre côté par une ouverture (5a) dans la surface intérieure (2) de la paroi (3),
dans lequel le dispositif de mélange comprend en outre
un magasin (6) ayant une surface intérieure cylindrique dont l'axe de cylindre coïncide avec un axe de cylindre de la surface extérieure cylindrique (4) de la paroi (3),
dans lequel le magasin (6) comprend une pluralité de canaux (8a, 8b, 8c) s'étendant chacun depuis un raccord respectif (9a, 9b, 9c) jusqu'à une ouverture respective (10) dans la surface intérieure cylindrique (7) du magasin (6),
dans lequel le magasin (6) et la paroi (3) sont mobiles l'un par rapport à l'autre de telle sorte que les ouvertures (10) de la pluralité de canaux dans la surface intérieure (7) du magasin (6) peuvent être respectivement raccordées à l'ouverture (5b) du ou des canaux d'amenée (5) dans la surface extérieure (4) de la paroi (3) de manière à transporter des milieux (9a, 9b, 9c),
**caractérisé en ce que** le dispositif de mélange comprend en outre un mélangeur (11), qui est mobile le long de l'axe de cylindre de la surface extérieure (4) de la paroi (3) pour mélanger des milieux dans la chambre de mélange (1), et **en ce que** les ouvertures (10) de la pluralité de canaux (8a, 8b, 8c) du magasin (6) sont ménagées dans la surface intérieure du magasin (6) dans exactement deux ou exactement trois plans qui sont perpendiculaires à l'axe de cylindre de la surface extérieure cylindrique (4) de la paroi (3).

2. Dispositif de mélange selon la revendication précédente,
dans lequel l'ouverture (5a) du ou des canaux d'amenée (5) dans la surface intérieure (2) de la paroi (3) est adjacente à une surface d'extrémité (14) de la chambre de mélange (1), laquelle surface d'extrémité est circonscrite par la surface intérieure (2) de la paroi (3) et fixe par rapport à la paroi (3).

3. Dispositif de mélange selon l'une des revendications précédentes,
dans lequel le magasin est de forme annulaire et le magasin de forme annulaire et la paroi (3) peuvent pivoter l'un par rapport à l'autre autour de l'axe de cylindre de la surface extérieure (4) de la paroi (3) et/ou coulisser l'un par rapport à l'autre dans la direction de l'axe de cylindre de la surface extérieure (4) de la paroi (3).

4. Dispositif de mélange selon l'une des revendications précédentes, comprenant une sortie qui est ménagée dans une surface d'extrémité (14) de la chambre de mélange (1), la surface d'extrémité étant fixe par rapport à la paroi (3) et perpendiculaire à l'axe de cylindre de la surface extérieure (4), et par laquelle des milieux peuvent être évacués de la chambre de mélange (1).

5. Dispositif de mélange selon l'une des revendications précédentes, comprenant un piston (13) qui délimite la chambre de mélange d'un côté dans la direction de l'axe de cylindre de la paroi extérieure, ledit côté étant opposé à une surface d'extrémité (14) de la chambre de mélange (1) et ladite surface d'extrémité étant fixe par rapport à la paroi extérieure, et qui est mobile dans la direction de l'axe de cylindre de la paroi extérieure, dans lequel le piston (13) comprend une soupape de purge par laquelle, dans un état ouvert, du gaz peut s'échapper de la chambre de mélange (1), et qui peut être fermée pour empêcher l'écoulement de gaz et de milieu.

6. Dispositif de mélange selon la revendication précédente, dans lequel le mélangeur (11) comprend un disque perpendiculaire à l'axe de cylindre de la surface extérieure (4), le disque comprenant des structures de mélange (12) à travers lesquelles le milieu peut passer d'un côté à l'autre du disque,
dans lequel le piston (13) présente un nombre d'éléments façonnés (19) égal au nombre de structures de mélange (12), lesquels éléments façonnés sont disposés sur le côté du piston (13) tourné vers le mélangeur (11) de telle sorte qu'ils emplissent complètement les structures de mélange (12) lorsque le piston (13) repose sur le disque du mélangeur (11).

7. Dispositif de mélange selon la revendication précédente, dans lequel les structures de mélange (12) sont des canaux se rétrécissant vers la surface d'extrémité dans la direction du piston (13) ou des canaux aux parois parallèles, dont les axes sont parallèles à l'axe de cylindre de la surface extérieure (4) de la paroi (3).

8. Dispositif de mélange selon l'une des revendications précédentes, comprenant une soupape (22a, 22b, 22c) pour chacun des canaux (8a, 8b, 8c) du magasin (6), soupape (22a, 22b, 22c) à travers laquelle un milieu peut être acheminé dans le canal correspondant (8a, 8b, 8c) et grâce à laquelle le débit d'entrée du milieu dans le canal correspondant (8a, 8b, 8c) peut être régulé.

9. Dispositif de mélange selon l'une des revendications précédentes,
dans lequel la paroi (3) comprend un cylindre d'étanchéité entourant la chambre de mélange (1),
dans lequel la surface extérieure du cylindre d'étanchéité constitue au moins une partie de la surface extérieure cylindrique (4) de la paroi(3)
et dans lequel le ou les canaux d'amenée (5) traversent une paroi du cylindre d'étanchéité.

10. Procédé de mélange de milieux dans lequel le procédé est mis en œuvre à l'aide d'un dispositif de mélange selon l'une des revendications précédentes.

11. Procédé de mélange de milieux selon la revendication précédente,
dans lequel le magasin de forme annulaire (6) et la paroi (3) sont déplacés l'un par rapport à l'autre de telle sorte que les ouvertures (10) d'au moins deux canaux (8a, 8b, 8c) dans la surface intérieure (7) du magasin (6), entre lesquelles se trouve au moins une autre ouverture (10) d'un canal (8a, 8b, 8c) du magasin (6), sont raccordées à l'ouverture (5b) du ou des canaux d'amenée (5) dans la surface extérieure (4) de la paroi (3) de manière à transporter des milieux,
dans lequel soit l'ouverture (10) du ou des autres canaux (8a, 8b, 8c) est balayée par l'ouverture (5b) du canal d'amenée (5) au cours du mouvement de l'une des au moins deux ouvertures (10) vers l'autre des au moins deux ouvertures (10), et une soupape (22a, 22b, 22c) à travers laquelle un milieu peut être acheminé dans le ou les autres canaux (8a, 8b, 8c) est fermée au moins durant le balayage,
soit le magasin (6) est déplacé par rapport à la paroi (3) lors du déplacement d'une ouverture (10) vers l'autre dans la direction de l'axe de cylindre de la paroi extérieure, de sorte qu'il est amené à rencontrer l'ouverture (10) du ou des autres canaux (8a, 8b, 8c) au cours du mouvement dans une direction angulaire autour de cet axe de cylindre.

12. Procédé selon l'une des deux revendications précédentes, dans lequel, lors d'une première étape, l'ouverture (5a) du canal d'amenée (5) est raccordée à un canal (8a, 8b, 8c) du magasin (6) via lequel un matériau de base est introduit dans la chambre de mélange (1),
lors d'une deuxième étape, le canal d'amenée (5) est raccordé à un canal (8a, 8b, 8c) du magasin (6) via lequel un premier matériau supplémentaire est introduit dans la chambre de mélange (1),
lors d'une troisième étape, le canal d'amenée (5) est raccordé à un canal (8a, 8b, 8c) du magasin (6) via lequel un deuxième matériau supplémentaire est introduit dans la chambre de mélange (1), et lors d'une quatrième étape, le canal d'amenée (5) est de nouveau raccordé au canal (8a, 8b, 8c) du magasin (6) via lequel le matériau de base est introduit dans la chambre de mélange (1).

13. Procédé selon la revendication précédente, dans lequel, lors d'une étape réalisée entre la deuxième et la troisième étape, le canal d'amenée (5) est de nouveau raccordé au canal (8a, 8b, 8c) du magasin (6) via lequel le matériau de base est introduit dans la chambre de mélange (1).

14. Procédé selon l'une des deux revendications précédentes,
dans lequel la deuxième étape et, avantageusement, également l'étape entre la deuxième et la troisième étape, est répétée pour au moins un autre matériau supplémentaire.
